# EUROPÄISCHE PATENTSCHRIFT

(11) **EP 1 439 663 B1**
(45) Veröffentlichungstag und Bekanntmachung des Hinweises auf die Patenterteilung: **17.08.2005**
(21) Anmeldenummer: 03104227.8
(22) Anmeldetag: 17.11.2003
(51) Int. Cl.: H04L 12/24

(54) **Verfahren für eine Klassifizierung von Netzwerk-Komponenten eines paket-orientierten Netzwerks**
Method of classification of network components of a packet oriented network
Procédé de classification des composants de réseau d'un réseau orienté paquets

(30) Priorität: 20.01.2003 DE 10301963
(43) Veröffentlichungstag der Anmeldung: 21.07.2004
(73) Patentinhaber: SIEMENS AKTIENGESELLSCHAFT, 80333 München (DE)
(72) Erfinder: Conradt, Michael, 85649, Brunnthal (DE); Totzke, Jürgen, 85586, Poing (DE)

(56) Entgegenhaltungen:
- US-B1- 6 377 987
- HWA-CHUN LIN ET AL: "An algorithm for automatic topology discovery of IP networks" COMMUNICATIONS, 1998. ICC 98. CONFERENCE RECORD. 1998 IEEE INTERNATIONAL CONFERENCE ON ATLANTA, GA, USA 7-11 JUNE 1998, NEW YORK, NY, USA,IEEE, US, 7. Juni 1998 (1998-06-07), Seiten 1192-1196, XP010284743 ISBN: 0-7803-4788-9
- GAVALAS D ET AL: "A hybrid centralised-distributed network management architecture" COMPUTERS AND COMMUNICATIONS, 1999. PROCEEDINGS. IEEE INTERNATIONAL SYMPOSIUM ON RED SEA, EGYPT 6-8 JULY 1999, LOS ALAMITOS, CA, USA,IEEE COMPUT. SOC, US, 6. Juli 1999 (1999-07-06), Seiten 434-441, XP010344111 ISBN: 0-7695-0250-4

## Beschreibung

Die folgende Erfindung betrifft ein Verfahren zur Klassifizierung von Netzwerk-Komponenten ausgehend von einer zentralen Management-Komponente - in der Literatur häufig als Manager bezeichnet.

In den letzten Jahren ist zu beobachten, dass Kommunikation einen immer größeren Stellenwert erlangt. Diese Kommunikation wird in großem Maße über "klassische" Telefonnetze - in der Literatur auch als "Public Switched Telephone Networks" bezeichnet - abgewickelt. Parallel zu den Telefonnetzen existieren Datennetze, mit ihrem bekanntesten Vertreter, dem Internet. Über derartige IP-orientierte Netzwerke (IP: Internet Protocol) werden derzeit im wesentlichen Text- und Bildnachrichten ausgetauscht. In beiden Welten ist Planung, Installation, Wartung und Betrieb der Netze erforderlich, was zum Teil hohe Kosten verursacht. Sowohl für das IP-orientierte Netzwerk als auch für das Telefonnetz fallen diese Kosten an. Es wäre daher wünschenswert, beide bisher getrennten Netze zusammen zu führen, so dass die anfallenden Kosten nur noch einmal auftreten.

Problematisch hierbei ist, dass beide Netze unterschiedliche Eigenschaften aufweisen. Die Telefonnetze bieten verbindungsorientierte, echtzeitfähige Dienste an. In der Internet-Architektur, die die am weitesten verbreitete bei den Datennetzen ist, wird ein verbindungsloser, paket-orientierter Dienst definiert. Die Pakete werden hierbei "hop-by-hop" nach dem sogenannten "best effort"-Prinzip befördert. Das bedeutet, dass die Pakete von den Zwischenstationen im Netzwerk jeweils autonom bis zur nächsten Station geleitet werden (hop-by-hop) und "so gut wie möglich" behandelt werden. Dadurch kann es bei Überlastung oder Fehlkonfiguration einer Station zu Verzögerungen bzw. sogar zum Verlust von Paketen kommen. Für Echtzeit-Verbindungen wie Telefonate oder Video-Konferenzen ist dieses Verhalten jedoch unerwünscht, da es bei Verlust oder Verzögerung von Paketen zu hör- bzw. sichtbaren Störungen kommen kann.

Möchte man nun eine Konvergenz der Netze erreichen, so dass alle Dienste in einem gemeinsam genutzten Datennetz erbracht werden, sind Vorkehrungen zu treffen, mit denen, trotz der schlechter geeigneten Architektur des Datennetzes, echtzeitfähige Dienste etabliert werden können. Eine Voraussetzung hierfür ist, im Datennetz eine bestimmte Dienstgüte zusichern zu können. Mit Dienstgüte - in der Literatur auch als "Quality of Service (kurz QoS)" bezeichnet - werden bestimmte Eigenschaften, wie eine maximale Bandbreite, eine maximale Verzögerung der Pakete oder eine Verlustrate bezeichnet.

Bisherige Ansätze zur Verwaltung von QoS-Merkmalen in IP-orientierten Netzwerken gehen nach dem Prinzip vor, dass der Weg der Pakete zwischen den beiden Kommunikationsendpunkten zum Zeitpunkt des Verbindungsaufbaus bestimmt wird. Auf jeder einzelnen Verbindungseinrichtung, die die Pakete auf ihrem Weg passieren, wird eine entsprechende Reservierung vorgenommen. Als Beispiel sei hier das Ressource Reservation Protocol (kurz RSVP) genannt. Einer der Nachteile bei dieser Art der Reservierung ist, dass jedes Zwischensystem auf das RSVP-Protokoll vorbereitet sein muss, um lokale Reservierungen überhaupt durchführen zu können. Das bringt bei älteren Netzwerken das Problem mit sich, dass alle Komponenten erweitert oder gar durch neue ersetzt werden müssen. Ein weiteres Problem ist, dass derartige Architekturen schlecht mit der Größe des IP-orientierten Netzwerkes skalierbar sind, da es bei jedem Zwischensystem zu Verzögerungen durch die durchzuführende Reservierung kommt. Gravierender ist jedoch die in den Zwischensystemen durchgeführte Kontrolle der Datenströme, die auch bei einer bereits bestehenden Verbindung zu starken Verzögerungen führt.

Ein anderer Ansatz ist der des sogenannten externen QoS-Managements. Hierbei finden die Reservierungen nicht innerhalb des IP-orientierten Netzwerkes statt, sondern außerhalb in einer kontrollierenden Instanz - in der Literatur häufig als Manager bezeichnet. Dieser Manager entscheidet, ob zusätzliche Echtzeit-Verkehre mit gegebener Dienstgüte im IP-orientierten Netzwerk noch zulässig sind, oder nicht. Um diese Entscheidung treffen zu können, müssen zwei Voraussetzungen erfüllt sein. Der Manager muss die schon im Netzwerk transportierten Verkehre und deren Merkmale kennen, und er muss genaue Informationen über den Zustand und den Aufbau des IP-orientierten Netzwerkes haben. Die erste Voraussetzung ist schon durch die Vorgehensweise erfüllt. Der externe Manager kennt bereits alle Verkehre im IP-orientierten Netzwerk - sie wurden bei ihm angemeldet und entsprechend zugelassen, oder abgelehnt.

Die zweite Voraussetzung, um in IP-orientierten Netzwerken externes QoS-Management etablieren zu können ist, genau deren Topologie und damit den Weg, auf dem einzelne Pakete im Netzwerk transportiert werden, zu kennen. Die Netzwerk-Architektur ist jedoch darauf ausgelegt, alle Entscheidungen lokal und möglichst autonom in den einzelnen Netzwerk-Komponenten zu treffen. Aus diesem Grund ist in IP-orientierten Netzwerken keine Instanz zu finden, die die Topologie des Gesamtnetzes kennt. Um jedoch lokale Entscheidungen treffen zu können, ist es für die Komponenten im IP-orientierten Netzwerke notwendig, Informationen als Basis der Entscheidung zu besitzen. Diese Informationen sind lokale (auf die direkte Umgebung begrenzte) Sichten auf die Gesamt-Topologie. Ein Beispiel hierfür ist die sogenannte "Forwarding Database" einer auf Schicht 2 des OSI-Referenzmodells arbeitenden Kommunikationsanlage - in der Literatur häufig als "Switch" bezeichnet - die einen Teil der lokalen Sicht des Switches auf das Gesamt-Netzwerk darstellt. Mit Hilfe dieser lokalen Topologie-Sichten lässt sich eine globale Sicht auf die Topologie generie ren. Um die lokalen Sichten der Netzwerk-Komponenten abzufragen, wird häufig das weit verbreitete "Simple Network Management Protocol" - kurz SNMP - verwendet. Mit Hilfe dieses Standards ist es möglich, den Zustand, und damit auch die lokale Sicht der Netzwerk-Komponente hersteller-unabhängig abzufragen.

Aus der US-Patentschrift US 6,377,987 B1 ist ein alternatives Verfahren zur Bestimmung der aktuellen physikalischen Struktur eines Netzwerkes bekannt, bei dem eine Ermittlung der Netzwerk-Struktur mit Hilfe eines Satzes von Netzwerk-Adressen erfolgt. Ausgehend von diesem Satz von Netzwerk-Adressen wird eine Gruppe von Komponenten ermittelt die dem Netzwerk zugeordnet sind. Anschließend werden von den Komponenten so genannte Schicht-2 und Schicht-3-Konfigurationsinformationen ausgelesen um Nachbarschaftsbeziehungen zwischen den Komponenten zu ermitteln.

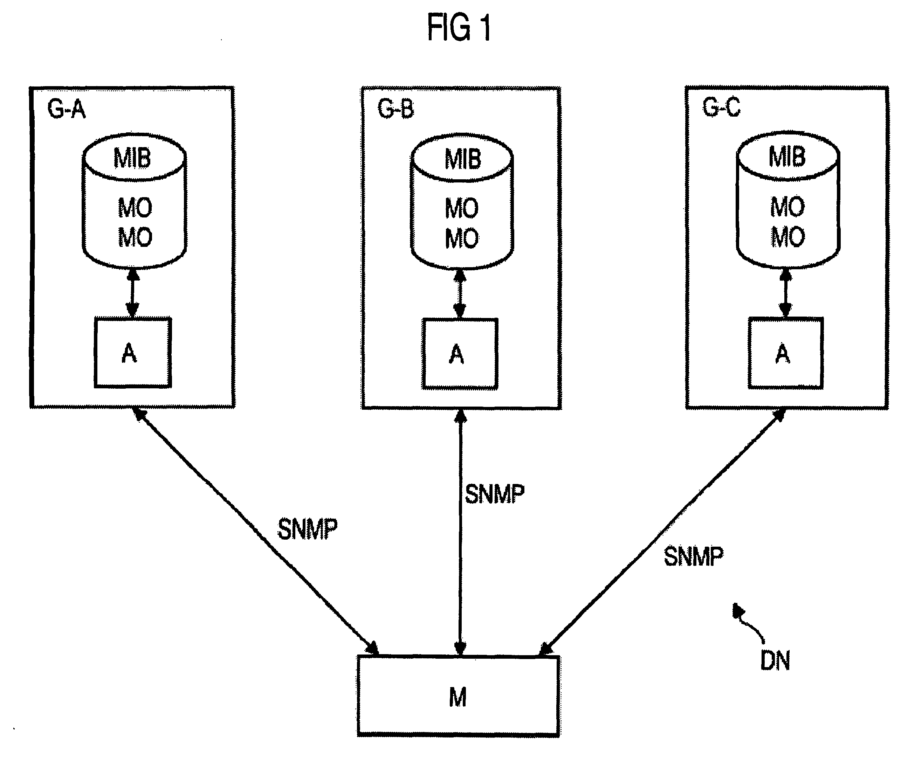

Anhand von Fig. 1 wird die grundlegende Struktur einer Datennetz Management Architektur veranschaulicht. Diese Architektur besteht aus den vier wesentlichen Komponenten:

Ausgehend von einer zentralen Management-Komponente M erfolgt ein Zugriff auf die managementfähigen Netzwerk-Komponenten G-A, G-B, G-C des IP-orientierten Netzwerks DN. Hierfür sind in den managementfähigen Netzwerk-Komponenten G-A, G-B, G-C sogenannte Management-Agenteneinheiten A vorgesehen, die jeweils eine Management-Schnittstelle für die managementfähige Netzwerk-Komponenten G-A, G-B, G-C zur Verfügung stellen. Der Datenaustausch zwischen der zentralen Management-Komponente M und den Management-Agenteneinheiten A erfolgt mittels des bereits angesprochenen Management-Protokolls SNMP. Er kann sowohl von der zentralen Management-Komponente M als auch von den Management-Agenteneinheiten A initiiert werden.

Die Management-Agenteneinheiten A dienen des weiteren einer Verwaltung einer in den managementfähigen Netzwerk-Komponenten G-A, G-B, G-C jeweils gespeicherten Management Information Base MIB. Die Management Information Base MIB umfasst eine Mehrzahl von sogenannten "Managed Objects" MO. Ein Managed Object MO ist eine Variable, die den Zustand oder die Historie einer managementfähigen Netzwerk-Komponenten G-A, G-B, G-C beschreibt bzw. festlegt. Welche Informationen in einem Managed Object MO hinterlegt sind, ist unter anderem im Standard RFC 1213; McCloghrie, M. Rose: "Management Information Base for Network Management of TCP/IP-bases internets: MIB-II", März 1991 festgelegt.

Die Menge aller in einer Netzwerk-Komponente G-A, G-B, G-C vorhandenen Managed Objects MO bildet die Management Information Base MIB. Die Management Information Base MIB beschreibt somit die Historie einer managementfähigen Netzwerk-Komponente G-A, G-B, G-C, seinen Zustand und damit auch seine lokale Sicht auf das IP-orientierte Netzwerk DN.

Zu Beginn einer Topologie-Erkennung ist es nötig, herauszufinden, welche Netzwerk-Komponenten in einem IP-orientierten Netzwerk vorhanden sind. Da in einem IP-orientierten Netzwerk keine zentrale Einheit vorhanden ist, die alle Teilnehmer kennt, wird an jede im lokalen Subnetz mögliche Adresse ein sogenannter "Ping" gesendet. Eine Netzwerk-Komponente, die einen solchen "Ping" mit ihrer Adresse empfängt, sendet (sofern sie nicht sehr ungewöhnlich konfiguriert ist) ein Anwort-Paket an die den "Ping" aussendende Einheit - im vorliegenden Fall die zentrale Management-Komponente M - zurück. Damit ist es möglich, alle Netzwerk-Komponenten im IP-orientierten Netzwerk zu erkennen, die auf Ping-Anfragen reagieren. Die Adressen der erkannten Netzwerk-Komponenten werden anschließend gespeichert.

Der nächste Schritt in der Topologie-Erkennung ist, die erkannten Netzwerk-Komponenten zu klassifizieren. Das heißt, sie in verschiedene Kategorien, wie beispielsweise Host, Router oder Switch zu unterteilen.

Als Host wird dabei eine einem Benutzer zugeordnete Netzwerk-Komponente, wie beispielsweise ein Arbeitsplatzrechner oder ein sogenanntes "IP-Phone", verstanden.

Als Router werden im allgemeinen Netzwerk-Komponenten mit Vermittlungskapazität in paket-vermittelnden Netzwerken bezeichnet, bei denen eine Vermittlung der Pakete auf Basis der Schicht 3 des OSI-Referenzmodells erfolgt.

Als Switch werden dahingegen Netzwerk-Komponenten mit Vermittlungskapazität in paket-vermittelnden Netzwerken bezeichnet, bei denen eine Vermittlung der Pakete auf Basis der Schicht 2 des OSI-Referenzmodells erfolgt.

Eine Unterteilung ist notwendig, da von den Netzwerk-Komponenten der einzelnen Kategorien unterschiedliche Informationen abfragbar sind. So hat zum Beispiel ein Router Informationen zu weiteren Subnetzen, die ein Switch oder Host nicht besitzen.

Beim Stand der Technik erfolgt die Klassifikation einer Netzwerk-Komponente durch eine Abfrage des entsprechenden zur Klassifizierung vorgesehenen Managed Objects MO in der Management Information Base MIB. In vielen der am Markt befindlichen Produkte werden in die Management Information Base MIB jedoch ungeeignete oder sogar falsche Werte eingetragen. Zusätzlich werden die Managed Objects MO durch eine unklare Definition des Standards uneinheitlich von verschiedenen Herstellern verwendet. Aus diesen Gründen ist es nicht möglich, verschiedene Netzwerk-Komponenten mit Hilfe der, dafür vorgesehenen Inhalte der Management Information Base MIB korrekt zu klassifizieren.

Der vorliegenden Erfindung liegt daher die Aufgabe zugrunde, ein Verfahren anzugeben, mit dem eine korrekte Klassifizierung von Netzwerk-Komponenten ermöglicht wird.

Die Lösung dieser Aufgabe erfolgt erfindungsgemäß mit den Merkmalen des Patentanspruchs 1.

Hierbei erfolgt eine Klassifizierung von Netzwerk-Komponenten eines paket-orientierten Netzwerks ausgehend von einer zentralen Management-Komponente. In einem ersten Schritt wird dabei ermittelt, ob es sich bei einer Netzwerk-Komponente um eine managementfähige Netzwerk-Komponente handelt, oder nicht.

Ist dies der Fall, wird überprüft, ob
- die Netwerk-Komponente die Schicht 3 des OSI-Referenzmodells unterstützt, und
- ob bereits Datenpakete zischen den Schnittstellen der Netzwerk-Komponente weitergeleitet wurden,
wobei in Fällen, in denen dies der Fall ist, die Netzwerk-Komponente als Router klassifiziert wird.

Ein wesentlicher Vorteil des erfindungsgemäßen Verfahrens besteht darin, dass das Verfahren mit nur geringem Aufwand in bereits bestehende Systeme implementiert werden kann.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, dass durch ein Heranziehen von standardmäßig zur Verfügung stehenden Informationen und eine Kombination von Eigenschaften und von der Historie einer Netzwerk-Komponente eine hersteller-unabhängige Klassifizierung der Netzwerk-Komponente auf einfache Weise ermöglicht wird.

Ein Ausführungsbeispiel der Erfindung wird im folgenden anhand der Zeichnung näher erläutert.

Dabei zeigen:
- Fig. 1:: ein Strukturbild mit den wesentlichen Funktionseinheiten einer Management Architektur in einem paket-orientierten Netzwerk; und
- Fig. 2:: ein Ablaufdiagramm zur Veranschaulichung der wesentlichen beim erfindungsgemäßen Verfahren ablaufenden Verfahrensschritte.

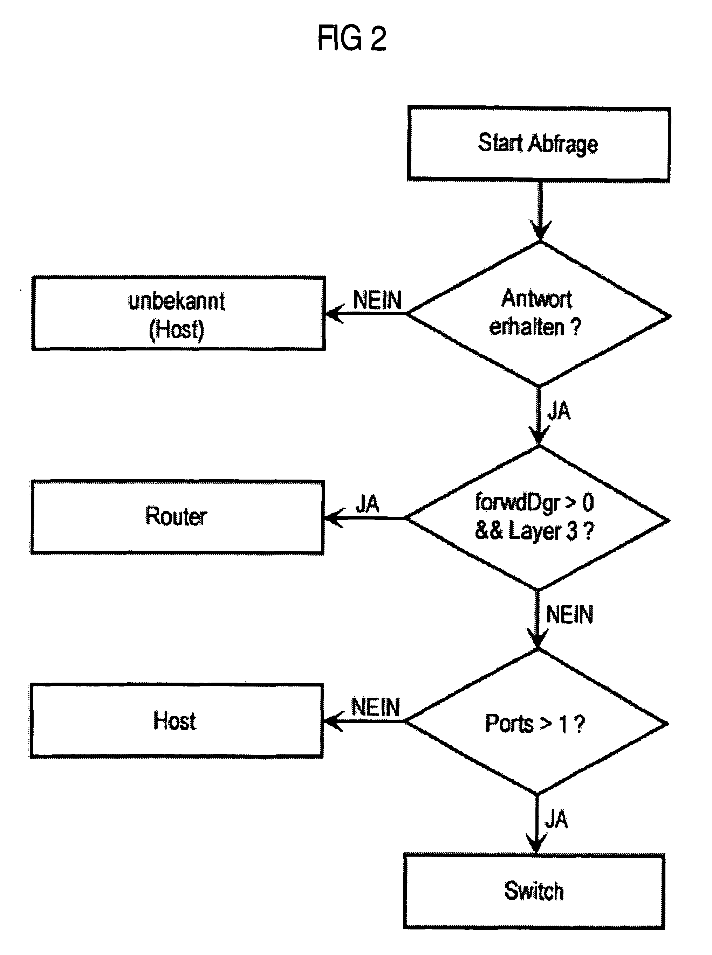

Zur besseren Veranschaulichung des erfindungsgemäßen Verfahrens wird bei der Beschreibung der Fig. 2 weiterhin auf die Bezeichnungen und Bezugszeichen der Fig. 1 Bezug genommen.

Gemäß dem erfindungsgemäßen Verfahren wird ausgehend von der zentralen Management-Komponente M in einem ersten Schritt ermittelt, ob es sich bei einer Netzwerk-Komponente G-A, G-B, G-C um eine managementfähige Netzwerk-Komponente G-A, G-B, G-C handelt. Hierfür wird überprüft, ob auf der Netzwerk-Komponente G-A, G-B, G-C eine der zentralen Management-Komponente M zugeordnete Management-Agenteneinheit A implementiert ist, d.h. ob die Netzwerk-Komponente G-A, G-B, G-C auf die Anfrage der zentralen Management-Komponente M antwortet.

Ist auf der Netzwerk-Komponente G-A, G-B, G-C keine Management-Agenteneinheit A implementiert, können von dieser Netzwerk-Komponente G-A, G-B, G-C keine Management-Informationen abgefragt werden. Die Klasse der Netzwerk-Komponente G-A, G-B, G-C ist somit unbekannt. In den meisten Fällen handelt es sich hierbei um Hosts.

Wird an der zentralen Management-Komponente M eine Antwort einer Netzwerk-Komponente G-A, G-B, G-C empfangen, wird in einem zweiten Schritt überprüft, ob die Netzwerk-Komponente G-A, G-B, G-C die Schicht 3 des OSI-Referenzmodells unterstützt, und ob bereits Datenpakete zwischen den Schnittstellen der Netzwerk-Komponente G-A, G-B, G-C weitergeleitet wurden.

Ob die Netzwerk-Komponente G-A, G-B, G-C die Schicht 3 des OSI-Referenzmodells unterstützt, wird dabei durch Abfrage des Managed Objects "sysServices" ermittelt. Jeder getestete Router meldet, dass die Schicht 3 des OSI-Referenzmodells unterstützt wird, allerdings auch einige Switche, oder als solche konfigurierte Router. Um diese Fälle ausschließen zu können, wird zusätzlich die Historie der Netzwerk-Komponente G-A, G-B, G-C betrachtet.

Hierfür wird durch die zentrale Management-Komponente M das Managed Object "ipForwDatagrams" abgefragt. Das Managed Object "ipForwDatagrams" ist als Zähler definiert, der nur dann erhöht wird, wenn eine Vermittlung von Datenpaketen auf Basis von Schicht 3 des OSI-Referenzmodells erfolgt.

Somit wird in Fällen, in denen durch das Managed Object "sysServices" angezeigt wird, dass die Schicht 3 des OSI-Referenzmodells unterstützt wird und in denen das Managed Object "ipForwDatagrams" einen vom Wert 0 unterschiedlichen Wert aufweist, die Netzwerk-Komponente G-A, G-B, G-C als Router klassifiziert.

Ein Problem ergibt sich bei Netzwerk-Komponenten G-A, G-B, G-C, die als Router aktiv waren und anschließend als Switch umkonfiguriert wurden. Bei dieser Umkonfiguration wird das Managed Object "ipForwDatagrams" unter Umständen nicht automatisch auf 0 zurückgesetzt. Meldet der Switch in diesem Fall immer noch, dass er die Schicht 3 des OSI-Referenzmodells unterstützt, wird er fälschlicherweise als Router und nicht als Switch klassifiziert. Um dieses Fehlverhalten zu vermeiden, muss dafür Sorge getragen werden, dass bei einer derartigen Umkonfiguration das Managed Object "ipForwDatagrams" manuell zurückgesetzt wird.

Wird im zweiten Schritt ein negatives Prüfungsergebnis ermittelt, so wird in einem dritten Schritt zusätzlich die Anzahl der Ports der Netzwerk-Komponente G-A, G-B, G-C ermittelt. Dies erfolgt durch die Abfrage des Managed Objects "ifNumber". In Fällen, in denen die Portanzahl größer 1 ist, wird die Netzwerk-Komponente G-A, G-B, G-C als Switch und in den anderen Fällen als Host klassifiziert.

Die in der zentralen Management-Komponente M mittels des erfindungsgemäßen Verfahrens ermittelten Topologie-Informationen können beispielsweise im Rahmen einer Ressourcen-Verwaltung oder zur Annahme-Kontrolle für echtzeit-kritische Netzwerk-Verbindungen eingesetzt werden. Auch ein Einsatz im Rahmen von Netzwerk-Planungswerkzeugen ist möglich.

## Patentansprüche

1. Verfahren für eine Klassifizierung von Netzwerk-Komponenten (G-A, G-B, G-C) eines paket-orientierten Netzwerks (DN) ausgehend von einer zentralen Management-Komponente (M), bei dem in einem ersten Schritt ermittelt wird, ob es sich bei einer Netzwerk-Komponente (G-A, G-B, G-C) um eine managementfähige Netzwerk-Komponente (G-A, G-B, G-C) handelt, und falls dies der Fall ist, überprüft wird,
- ob die Netzwerk-Komponente (G-A, G-B, G-C) die Schicht 3 des OSI-Referenzmodells unterstützt, und
- ob bereits Datenpakete zwischen den Schnittstellen der Netzwerk-Komponente (G-A, G-B, G-C) weitergeleitet wurden,
wobei in Fällen, in denen dies der Fall ist, die Netzwerk-Komponente (G-A, G-B, G-C) als Router klassifiziert wird.

2. Verfahren nach Patentanspruch 1,
**dadurch gekennzeichnet,**
**dass** für eine Kommunikation zwischen der zentralen Management-Komponente (M) und einer managementfähigen Netzwerk-Komponente (G-A, G-B, G-C) auf dieser eine der zentralen Management-Komponente (M) zugeordnete Management-Agenteneinheit (A) implementiert ist.

3. Verfahren nach Patentanspruch 2,
**dadurch gekennzeichnet,**
**dass** eine Kommunikation zwischen der zentralen Management-Komponente (M) und der Management-Agenteneinheit (A) mittels des SNMP-Protokolls (Simple Network Management Protocol) erfolgt.

4. Verfahren nach einem der vorhergehenden Patentansprüche,
**dadurch gekennzeichnet,**
**dass** in Fällen, in denen ein negatives Prüfungsergebnis ermittelt wird, die Anzahl der Ports der Netzwerk-Komponente (G-A, G-B, G-C) überprüft wird,
wobei in Fällen, in denen die Portanzahl größer 1 ist, die Netzwerk-Komponente (G-A, G-B, G-C) als Switch und in den anderen Fällen als Host klassifiziert wird.

5. Verfahren nach Patentanspruch 4,
**dadurch gekennzeichnet,**
**dass** die Überprüfungen durch eine Abfrage von Managed Objects (MO) in einer Management Information Base (MIB) der entsprechenden Netzwerk-Komponente (G-A, G-B, G-C) erfolgen.

6. Verfahren nach Patentanspruch 5,
**dadurch gekennzeichnet,**
**dass** die Management Information Base (MIB) einer Netzwerk-Komponente (G-A, G-B, G-C) durch die in der Netzwerk-Komponente (G-A, G-B, G-C) implementierte Management-Agenteneinheit (A) verwaltet wird.

7. Zentrale Management-Komponente (M),
**dadurch gekennzeichnet,**
**dass** die Komponente zur Durchführung eines Verfahrens nach einem der Patentansprüche 1 bis 6 konfiguriert ist.

8. Programm mit einer Befehlsfolge,
**dadurch gekennzeichnet,**
**dass** bei einer Ausführung der Befehlsfolge durch einen Prozessor ein Verfahren nach einem der Patentansprüche 1 bis 6 ausgeführt wird.

## Claims

1. Method for classifying network components (G-A, G-B, G-C) of a packet-oriented network (DN) taking a central management component (M) as the basis, wherein in a first step it is determined whether a network component (G-A, G-B, G-C) is a management-capable network component (G-A, G-B, G-C), and if this is the case, a check is carried out as to
- whether the network component (G-A, G-B, G-C) supports the layer 3 of the OSI reference model, and
- whether data packets between the interfaces of the network component (G-A, G-B, G-C) were routed,
whereby if the result is affirmative, the network component (G-A, G-B, G-C) is classified as a router.

2. Method according to claim 1,
**characterised in that**
for the purposes of a communication between the central management component (M) and a management-capable network component (G-A, G-B, G-C), a management agent unit (A) assigned to the central management component (M) is implemented on this network component.

3. Method according to claim 2,
**characterised in that**
a communication between the central management component (M) and the management agent unit (A) takes place by means of the SNMP protocol (Simple Network Management Protocol).

4. Method according to one of the preceding claims,
**characterised in that**
in cases in which a negative result is determined, the number of ports of the network component (G-A, G-B, G-C) is checked, whereby in cases, in which the port number is greater than 1, the network component (G-A, G-B, G-C) is classified as a switch and in the other cases as a host.

5. Method according to claim 4,
**characterised in that**
the checks are performed by an interrogation of managed objects (MO) in a management information base (MIB) of the corresponding network component (G-A, G-B, G-C).

6. Method according to claim 5,
**characterised in that**
the management information base (MIB) of a network component (G-A, G-B, G-C) is administered by the management agent unit (A) implemented in the network component (G-A, G-B, G-C).

7. Central management component (M),
**characterised in that**
the component is configured for performing a method according to one of claims 1 to 6.

8. Program with a command sequence,
**characterised in that**
a method according to one of claims 1 to 6 is performed in an execution of the command sequence by a processor.

## Revendications

1. Procédé de classification des composants de réseau (G-A, G-B, G-C) d'un réseau (DN) orienté paquets, partant d'un composant de gestion central (M), dans lequel il est déterminé dans une première étape si, dans le cas d'un composant de réseau (G-A, G-B, G-C), il s'agit d'un composant de réseau capable de gestion (G-A, G-B, G-C) et, si cela est le cas, il est vérifié
- si le composant de réseau (G-A, G-B, G-C) supporte la couche 3 du modèle de référence OSI, et
- si des paquets de données ont déjà été transmis entre les interfaces des composants de réseau (G-A, G-B, G-C),
le composant de réseau (G-A, G-B, G-C) étant classé comme router dans les cas où ceci se vérifie.

2. Procédé selon la revendication 1,
**caractérisé en ce**
**que** pour une communication entre le composant de gestion central (M) et un composant de réseau capable de gestion (G-A, G-B, G-C), une unité d'agent de gestion (A) affectée au composant de gestion central (M) est réalisée sur ce composant capable de gestion,

3. Procédé selon la revendication 2,
**caractérisé en ce**
**qu'**une communication entre le composant de gestion central (M) et l'unité d'agent de gestion (A) est réalisée au moyen du protocole SNMP (Simple Network Management Protocol).

4. Procédé selon l'une quelconque des revendications précédentes,
**caractérisé en ce**
**que** dans les cas où un résultat de vérification négatif est déterminé, le nombre de ports du composant de réseau (G-A, G-B, G-C) est vérifié,
dans les cas où le nombre de ports est supérieur à 1, le composant de réseau (G-A, G-B, G-C) étant classé comme switch et, dans les autres cas, comme host.

5. Procédé selon la revendication 4,
**caractérisé en ce**
**que** les vérifications sont réalisées au moyen d'une interrogation de Managed Objects (MO) dans une Management Information Base (MIB) du composant de réseau (G-A, G-B, G-C) correspondant.

6. Procédé selon la revendication 5,
**caractérisé en ce**
**que** la Management Information Base (MIB) d'un composant de réseau (G-A, G-B, G-C) est gérée par l'unité d'agent de gestion (A) réalisée dans le composant de réseau (G-A, G-B, G-C).

7. Composant de gestion central (M),
**caractérisé en ce**
**que** le composant pour la réalisation d'un procédé est configuré selon l'une quelconque des revendications 1 à 6.

8. Programme comprenant une séquence d'instructions,
**caractérisé en ce**
**que** lors d'une exécution de la séquence d'instruction au moyen d'un processeur, un procédé selon l'une quelconque des revendications 1 à 6 est réalisé.
